# DEMANDE DE BREVET EUROPEEN

(11) **EP 1 020 337 A1**
(43) Date de publication de la demande: **19.07.2000**
(21) Numéro de dépôt: 00400049.3
(22) Date de dépôt: 11.01.2000
(51) Int. Cl.: B60R 25/02

(54) **Antivol de direction de véhicule automobile**

(30) Priorité: 15.01.1999 FR 9900402
(71) Demandeur: Valeo Securité Habitacle, 94042 Créteil (FR)
(72) Inventeur: Canard, Louis, 58000 Nevers (FR)
(74) Mandataire: Lenne, Laurence

(57) **Abrégé**

L'invention propose un antivol de direction de véhicule automobile du type comportant un boîtier dans lequel est monté à rotation un rotor (16, 18) d'un verrou qui entraîne en rotation un organe de sortie rotatif (20) formant came (47) qui est susceptible de coopérer avec un pêne, du type dans lequel un tronçon cylindrique d'extrémité avant (18) du rotor (16) est reçu dans un alésage arrière (34) de l'organe de sortie (20) qui est lié en rotation au rotor (16, 18), caractérisé en ce que les moyens d'immobilisation axiale de l'organe de sortie (20) par rapport au rotor (16) comporte un organe d'immobilisation (52) en forme d'un jonc élastique porté par l'organe de sortie (20) et comportant une branche (58) déformable élastiquement dont une extrémité libre active (64) fait saillie radialement vers l'intérieur dans l'alésage (34) de l'organe de sortie (20) pour être reçue dans une encoche (78) formée dans le rotor (16), et en ce que le rotor (16, 18) comporte des moyens (80) pour l'engagement automatique de l'extrémité (64) du jonc (52) dans l'encoche (78) du rotor (16, 18).

## Description

La présente invention concerne un antivol de direction de véhicule automobile.

L'invention concerne plus particulièrement un antivol de direction de véhicule automobile du type comportant un boîtier dans lequel est monté à rotation un rotor d'un verrou qui entraîne en rotation un organe de sortie rotatif formant came qui est susceptible de coopérer avec un pêne pour commander les déplacements de ce dernier, du type dans lequel un tronçon cylindrique d'extrémité avant du rotor est reçu dans un alésage arrière de l'organe de sortie, et du type dans lequel l'organe de sortie est lié en rotation au rotor, ces deux éléments étant immobilisés axialement l'un par rapport à l'autre.

On connaît de nombreuses conceptions d'un tel type d'antivol qui est plus fréquemment utilisé pour empêcher les vols de véhicule, et notamment les vols de voitures particulières.

De nombreux perfectionnements ont été apportés aux antivols de ce type, qui concernent notamment le verrou, afin d'améliorer la résistance de l'antivol aux différents modes d'effraction imaginés par les voleurs de véhicules.

La présente invention a pour but de proposer un perfectionnement à l'antivol qui permet de réaliser de manière simple et automatisée l'assemblage des différents composants.

Dans ce but, l'invention propose un antivol de direction de véhicule automobile du type comportant un boîtier dans lequel est monté à rotation un rotor d'un verrou qui entraîne en rotation un organe de sortie rotatif formant came qui est susceptible de coopérer avec un pêne pour commander les déplacements de ce dernier, du type dans lequel un tronçon cylindrique d'extrémité avant du rotor est reçu dans un alésage arrière de l'organe de sortie, et du type dans lequel l'organe de sortie est lié en rotation au rotor, ces deux éléments étant immobilisés axialement l'un par rapport à l'autre, caractérisé en ce que les moyens d'immobilisation axiale de l'organe de sortie par rapport au rotor du verrou comporte un organe d'immobilisation en forme d'un ressort porté par l'organe de sortie comportant une branche déformable élastiquement dont une extrémité libre active fait saillie radialement vers l'intérieur dans l'alésage de l'organe de sortie pour être reçue dans une encoche formée dans la surface périphérique du tronçon d'extrémité avant du rotor, et en ce que, en vue de permettre l'assemblage automatique de ces éléments, le rotor comporte des moyens pour l'engagement automatique de l'extrémité libre de l'organe d'immobilisation dans l'encoche du rotor.

Selon d'autres caractéristiques de l'invention :
- le tronçon d'extrémité avant du rotor comporte une rampe formée dans sa surface cylindrique périphérique qui s'étend axialement d'avant en arrière et radialement de l'intérieur vers l'extérieur, depuis le bord avant du rotor, pour coopérer avec l'extrémité libre active de l'organe d'immobilisation lors de l'introduction axiale du tronçon d'extrémité avant du rotor dans l'alésage arrière de l'organe de sortie ;
- la rampe est disposée angulairement au droit de l'encoche, et le rotor est lié en rotation à l'organe de sortie par des moyens de formes complémentaires qui s'emboîtent axialement lors de l'introduction axiale du tronçon d'extrémité avant du rotor dans l'alésage arrière de l'organe de sortie ;
- l'organe d'immobilisation est un élément en fil en forme d'arc de cercle qui est logé dans une gorge circulaire radiale formée dans la surface périphérique de l'organe de sortie et dont l'extrémité libre active s'étend radialement à travers une lumière formée dans le fond de la gorge pour s'étendre radialement vers l'intérieur dans l'alésage arrière de l'organe de sortie ;
- l'autre extrémité libre de l'élément en fil est conformé en crochet et est reçue dans un trou du fond de la gorge pour retenir l'élément en position dans la gorge ;
- l'extrémité libre active de l'élément en fil est repliée en forme d'épingle à cheveux d'orientation globalement radiale avec son brin intermédiaire en arc de cercle qui fait saillie radialement dans l'alésage arrière de l'organe de sortie pour être reçu dans l'encoche du rotor ;
- le brin libre de extrémité libre active en épingle à cheveux est conformé en crochet pour permettre l'action d'un outil en vue de l'extraction radiale de l'extrémité libre active de l'élément en fil hors de l'encoche du rotor pour le démontage des éléments ;
- l'organe de sortie est délimité par surface périphérique de forme générale cylindrique qui est montée à rotation dans un logement complémentaire du boîtier, et le boîtier comporte une fenêtre d'orientation radiale qui, pour une position angulaire déterminée du rotor par rapport au boîtier, est en regard de extrémité libre en épingle à cheveux conformée en crochet pour permettre l'introduction d'un outil de démontage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée qui illustre les principaux composants d'un antivol de direction de véhicule automobile réalisé conformément aux enseignements de l'invention, la vue représentant le boîtier de l'antivol par l'arrière ;
- la figure 2 est une vue schématique en section longitudinale des principaux composants d'un dispositif d'antivol réalisé conformément aux enseignements de l'invention et sur laquelle les différents éléments et composants sont illustrés en position assemblée ;
- la figure 3 est une vue en perspective éclatée et à plus grande échelle qui illustre la partie d'extrémité avant du rotor de verrou, l'organe de sortie associé à celui-ci et le joint élastique de liaison en translation entre ces deux éléments ;
- la figure 4 est une vue similaire à celle de la figure 3 sur laquelle des portions des deux éléments ont été arrachés selon des plans transversaux de section passant respectivement par l'encoche du rotor et par la gorge qui reçoit le joint élastique dans l'organe de sortie ;
- les figures 5, 6 et 7 sont trois vues à grande échelle en section axiale qui illustrent la coopération des différents éléments et composants lors de l'assemblage de l'organe de sortie sur le rotor par introduction axiale de l'extrémité avant de ce dernier dans l'alésage arrière de l'organe de sortie ;
- la figure 8 est une vue en section transversale, par un plan passant par le jonc de retenue et qui représente l'antivol de la figure 2 en position de repos correspondant à celle de la figure 2 dans laquelle la colonne de direction est verrouillée ; et
- la figure 9 est une vue similaire à celle de la figure 8 sur laquelle le rotor de verrou est illustré dans une position angulaire différente, par exemple dans la position dite accessoires de l'antivol, dans laquelle il est possible d'accéder au jonc de retenue au moyen d'un outil pour permettre le démontage du rotor de verrou.

Dans la description qui va suivre, on utilisera les termes "horizontal", "vertical", "supérieur", "inférieur", etc. à titre non limitatif, notamment en référence aux figures, afin de faciliter les explications et la compréhension de la description et des revendications.

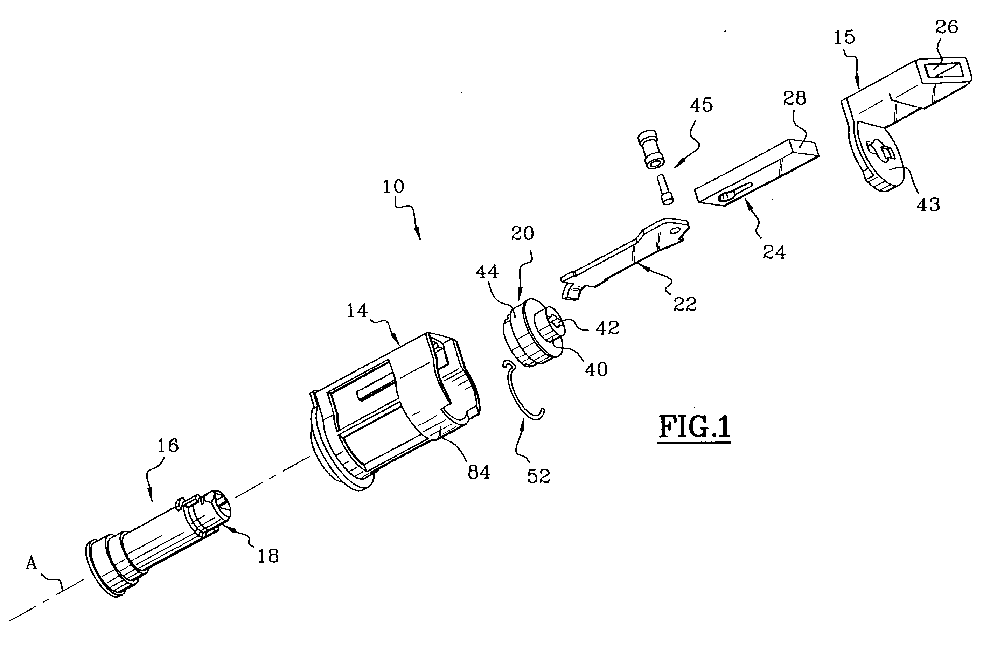

On a représenté à la figure 1 les principaux composants d'un exemple de réalisation d'un dispositif 10 d'antivol de véhicule automobile.

Celui-ci comporte un boîtier 12 en deux parties arrière 14 et avant 15.

La partie arrière 14 reçoit à rotation, autour d'un axe longitudinal A, un rotor 16, d'un verrou non représenté en détails, dont le tronçon cylindrique d'extrémité avant 18 entraîne en rotation un organe de sortie 20 formant came qui commande les déplacements en coulissement longitudinal dans les deux sens, selon une direction parallèle à l'axe A, d'une tirette 22 de commande des déplacements d'un pêne de verrouillage 24.

Le pêne 24 est guidé en coulissement dans une glissière 26 formée dans la partie avant 15 du boîtier 12 de manière que son extrémité longitudinale avant 28 fasse saillie axialement au delà de la partie 15 pour être reçue dans une des rainures axiales 30 appartenant à un arbre 32 de la colonne de direction à laquelle est associé le dispositif d'antivol 10.

Le tronçon d'extrémité libre avant 18 de diamètre réduit du rotor 16 entraîne en rotation dans les deux sens l'organe de sortie 20 de forme générale cylindrique annulaire qui comporte un alésage interne arrière 34 de grand diamètre dans lequel est reçu l'extrémité avant 18 du verrou 16, l'entraînement en rotation entre les deux éléments étant assuré par un ergot 38 de la partie 18 reçu axialement dans une encoche complémentaire 36 de l'alésage 34.

La partie cylindrique annulaire avant 40 de plus petit diamètre de l'organe de sortie 20 est guidée en rotation dans un trou 41 formé dans la partie en forme de plaque transversale 43 de la partie avant 15 du boîtier.

Le tronçon d'extrémité avant 40 de l'organe de sortie 20 est conformé intérieurement avec une forme 42 qui n'est pas de révolution, notamment pour entraîner en rotation un ensemble commutateur/interrupteur électrique associé à l'antivol 10 et qui n'est pas représenté sur les figures.

Dans sa partie longitudinale 49 arrière, le pêne 24 comporte une lumière longitudinale qui reçoit en coulissement un doigt cylindrique 45 de commande de ses déplacements dans les deux sens.

La partie inférieure du doigt de commande 45 coopère avec des moyens 47 formant came portés par l'organe de sortie 20.

La partie principale arrière 44 de plus grand diamètre de l'organe de sortie 20 est délimitée par une surface cylindrique 46 formant jupe périphérique qui est délimitée axialement vers l'arrière par un épaulement radial annulaire 48 et qui se prolonge axialement vers l'arrière par la surface cylindrique externe 50 de la partie arrière de plus petit diamètre 40 qui est délimitée par une face transversale d'extrémité arrière annulaire transversale 51.

A cet effet, dans la paroi cylindrique 46 est formé un logement de commande 47 formant came qui coopère avec le doigt de commande 45 selon une conception qui ne sera pas décrite ici plus en détail.

Conformément aux enseignements de l'invention, afin de retenir axialement le rotor 16 de verrou par rapport à l'organe de sortie 20, il est prévu un jonc 52 d'immobilisation axiale du tronçon d'extrémité libre avant 18 du rotor 16 à l'intérieur de l'alésage arrière 34 de l'organe de sortie 20.

Le jonc 52 est un élément en fil de ressort sensiblement en forme de demi-cercle qui s'étend globalement dans un plan transversal de l'organe de sortie 20 perpendiculaire à l'axe A.

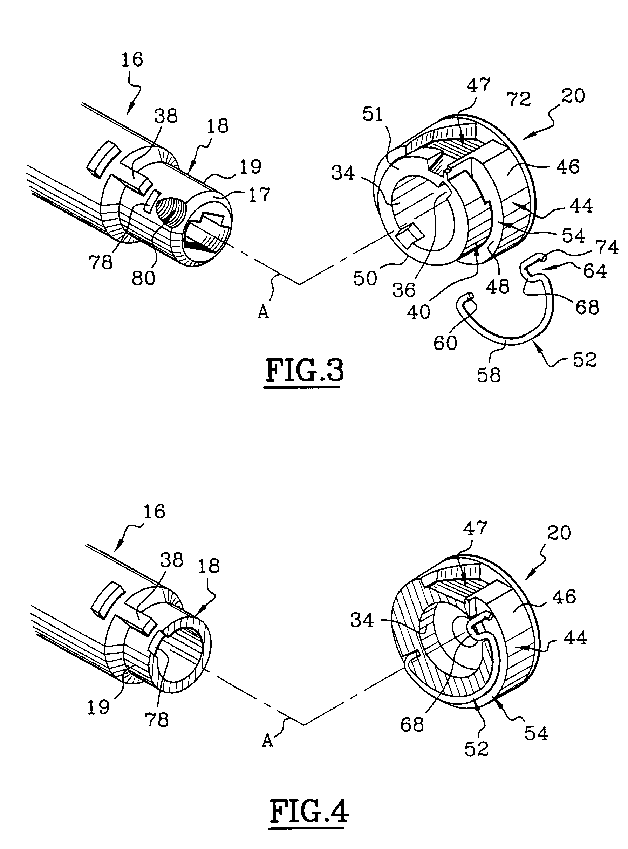

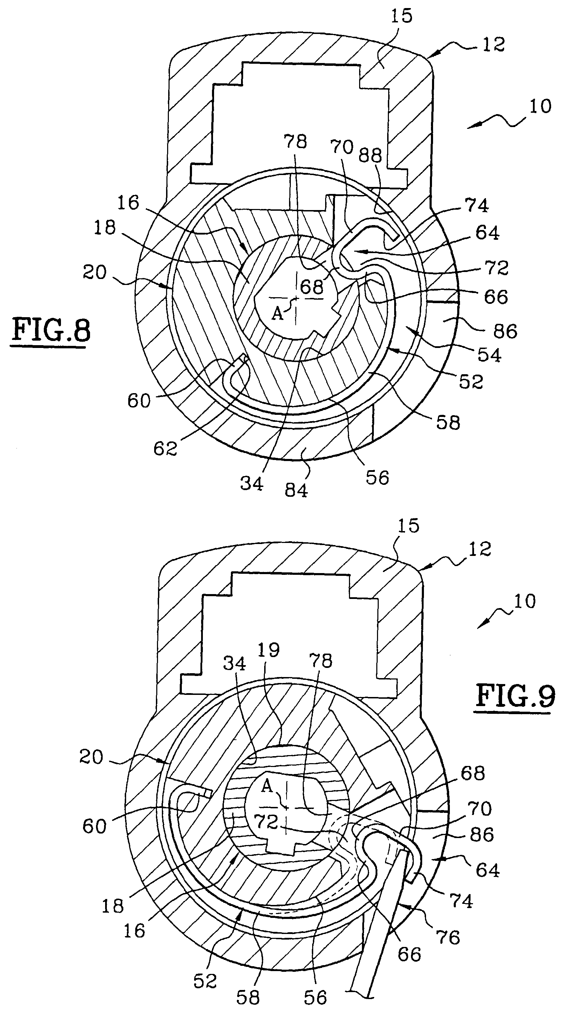

Le jonc élastique 52 est reçu globalement dans une gorge radiale interne 54 formée dans la paroi cylindrique périphérique 46 de la partie avant 44 de plus grand diamètre de l'organe de sortie 20 et qui s'étend, comme on peut le voir par exemple aux figures 4 et 8, sensiblement sur une demi-circonférence.

La gorge 54 est délimitée par un fond radial sensiblement cylindrique 56 contre lequel, en position montée du jonc 52 et en position assemblée des composants, le corps ou branche principale 58 du jonc 52 est en appui radialement vers l'intérieur.

Afin de retenir le jonc 52 dans la gorge 54, l'extrémité libre 60 du jonc 52 est replié et conformé en doigt de fixation d'orientation radiale intérieure et elle est reçue dans un trou complémentaire 62 formé en vis-à-vis dans le fond 56 de la gorge 54 qui reçoit le joint élastique 52.

L'autre extrémité libre 64 du jonc 52, qui constitue l'extrémité libre active du jonc 52 au sens de l'invention, est repliée radialement vers l'intérieur en forme d'épingle à cheveux.

Ainsi, l'extrémité libre active 64 comporte un premier brin 66 d'orientation radiale, puis un brin intermédiaire 68 en forme d'arc de cercle à 180° qui relie le premier brin 66 à un deuxième brin libre 70 lui aussi d'orientation radiale et sensiblement parallèle au premier brin 66.

La partie d'extrémité libre active 64 s'étend radialement vers l'intérieur dans l'alésage arrière 34 de l'organe de sortie 20 en passant à travers une lumière 72 formée en vis-à-vis dans le fond 56 de la gorge 54 qui reçoit le jonc élastique 52.

Le brin libre 70 de l'extrémité libre 64 en épingle à cheveux du jonc élastique 54 est conformé en un crochet 74 pour permettre, comme cela sera expliqué ultérieurement, l'action d'un outil 76 en vue de l'extraction radiale de l'extrémité libre active 64 du jonc élastique 52 hors de l'alésage arrière 34 de l'organe de sortie 20.

Le tronçon d'extrémité libre avant 18 du rotor 16 du verrou comporte, dans sa surface cylindrique périphérique 19, une encoche 78 qui s'étend radialement vers l'intérieur en direction de l'axe A et qui est dimensionnée de manière à pouvoir recevoir la partie de l'extrémité libre active 64 du jonc élastique 52 qui fait saillie radialement dans l'alésage arrière 34 de l'organe de sortie 20, c'est-à-dire plus précisément le brin intermédiaire semi-circulaire 68.

Agencée angulairement au droit de l'encoche 76, il est prévu une rampe 80 dans la surface périphérique 19 du tronçon d'extrémité libre avant 18 du rotor 16.

La rampe 80 est une facette plane d'orientation axiale qui est inclinée d'avant en arrière et radialement de l'intérieur vers l'extérieur et qui s'étend depuis le bord transversal annulaire d'extrémité libre avant 17 du tronçon 18.

On décrira maintenant l'assemblage automatique du rotor 16 avec l'organe de sortie 20.

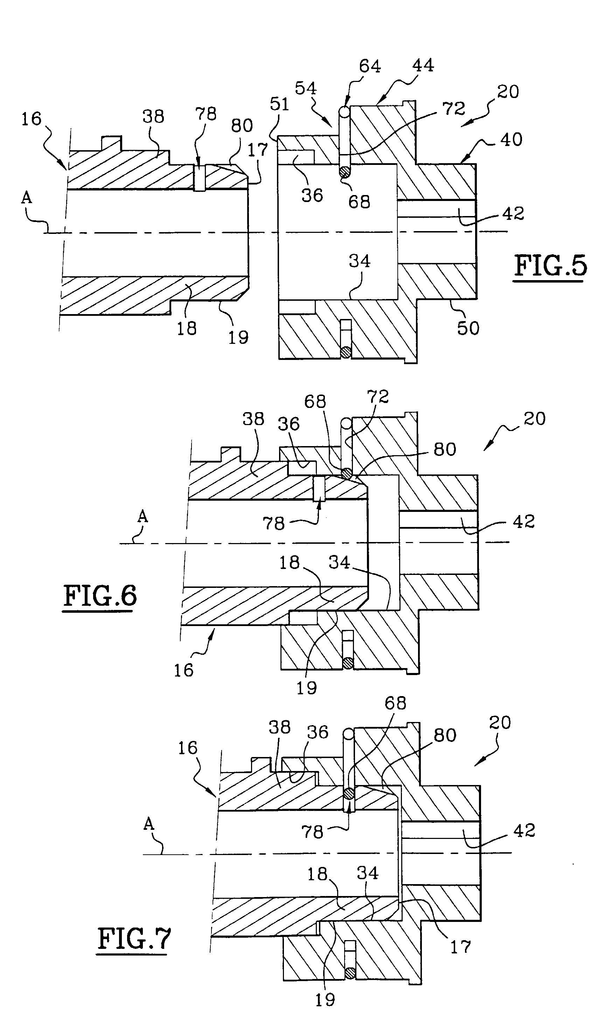

En partant de la position illustrée à la figure 5, on voit que le rotor 16 est amené dans une position d'approche dans laquelle son tronçon d'extrémité libre avant 18 est en regard de l'alésage arrière 34 de l'organe de sortie 20 avec ces deux éléments orientés angulairement l'un par rapport à l'autre de manière que l'ergot 38 soit en regard de l'encoche 36, ce qui correspond à orienter angulairement la rampe 80 au droit du brin 68 de la partie d'extrémité libre active 64 du jonc élastique 52.

L'assemblage se poursuit en introduisant axialement d'arrière en avant, c'est-à-dire de la gauche vers la droite en considérant les figures 5 à 7, le tronçon l'extrémité libre avant 18 à l'intérieur de l'alésage arrière 34 de l'organe de sortie 20.

Dans la position suivante illustrée à la figure 6, on voit que la rampe 80 coopère avec le brin 68 pour provoquer l'effacement, radialement vers l'extérieur, de ce brin dans la lumière 72 jusqu'à atteindre la position axiale relative des deux éléments 16 et 20 illustré à la figure 7 dans laquelle le brin 68 est au droit de l'encoche 78.

Dans cette position, du fait de l'élasticité propre du jonc 52 et de sa partie d'extrémité libre active 64, celle-ci est rappelée en permanence radialement vers l'intérieur de manière que le brin intermédiaire 68 pénètre automatiquement dans l'encoche 78 du rotor 16.

Dans la position illustrée à la figure 7, le rotor 16 est donc immobilisé en rotation par rapport à l'organe de sortie 20 et il est aussi immobilisé en translation axiale par rapport à ce dernier élément.

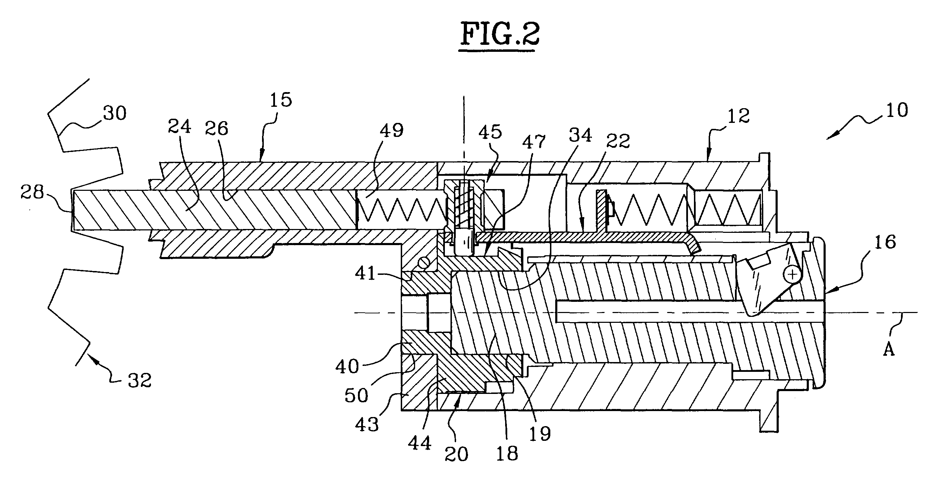

Un tel agencement permet de réaliser l'assemblage de tous les composants de l'antivol illustré à la figure 2 en terminant par l'introduction axiale d'arrière en avant, c'est-à-dire de la droite vers la gauche en considérant la figure 2, du rotor 16 dans le boîtier 12, cette opération finale aboutissant à solidariser le rotor 16 à l'organe de sortie 20 qui peut être lui-même retenu axialement à l'intérieur du boîtier 12. Si le jonc 52 ne coopère pas correctement avec le rotor 16, c'est-à-dire si l'assemblage ne s'est pas effectué correctement, le jonc 52 fait saillie hors de la gorge 54 et empêche toute rotation du rotor 16, même avec une clef conforme.

Pour permettre un démontage du rotor 16 en le désolidarisant axialement de l'organe de sortie 20, il est prévu dans la paroi cylindrique externe 84 constituant la partie inférieure de la partie arrière 14 du boîtier 12, une fenêtre 86 qui débouche radialement vers l'intérieur au droit de la partie de plus grand diamètre 44 de l'organe de sortie 20 et dans le plan transversal moyen dans lequel s'étend le jonc élastique 52.

Comme on peut le voir à la figure 8, dans la position angulaire de repos du verrou 16 correspondant à la position de repos de l'antivol illustré à la figure 2, la fenêtre 86 s'étend en regard de la branche principale 58 du jonc élastique 52 et il est impossible d'agir sur cette dernière pour extraire le brin 58 hors de l'encoche 78 car la partie en forme de crochet 74 du brin libre 70 de la partie d'extrémité libre active 64 s'étend alors en regard d'une portion interne en vis-à-vis 88 du boîtier 14, 84.

Par contre, si l'on fait tourner le rotor 16, au moyen d'une clef conforme, autour de son axe A pour atteindre la position angulaire illustrée à la figure 9 correspondant par exemple à la position "accessoires" de l'antivol, on amène la partie d'extrémité libre active 64 en regard de la fenêtre 86, ce qui permet d'introduire dans cette dernière un outil 76, représenté ici sous la forme d'un tournevis, au moyen duquel on peut agir sur le crochet 74 pour déformer élastiquement le jonc 52 à l'encontre de son élasticité propre en extrayant ainsi radialement vers l'extérieur le brin 68 hors de l'encoche 78.

Dans cette position illustrée à la figure 9, il est donc possible d'extraire axialement le rotor 16 par rapport à l'organe de sortie 20 dans la mesure où son tronçon d'extrémité libre avant 18 n'est plus retenue axialement à l'intérieur de l'alésage arrière 34 de l'organe de sortie 20.

## Revendications

1. Antivol (10) de direction de véhicule automobile du type comportant un boîtier (12, 14, 15) dans lequel est monté à rotation un rotor (16, 18) d'un verrou qui entraîne en rotation un organe de sortie rotatif (20) formant came qui est susceptible de coopérer avec un pêne (24) pour commander les déplacements de ce dernier, du type dans lequel un tronçon cylindrique d'extrémité avant (18) du rotor (16) est reçu dans un alésage arrière (34) de l'organe de sortie (20), et du type dans lequel l'organe de sortie (20) est lié en rotation au rotor (16, 18), ces deux éléments (16, 18, 20) étant immobilisés axialement l'un par rapport à l'autre, caractérisé en ce que les moyens d'immobilisation axiale de l'organe de sortie (20) par rapport au rotor (16) du verrou comporte un organe d'immobilisation (52) en forme d'un ressort porté par l'organe de sortie (20) comportant une branche (58) déformable élastiquement dont une extrémité libre active (64) fait saillie radialement vers l'intérieur dans l'alésage (34) de l'organe de sortie (20) pour être reçue dans une encoche (78) formée dans la surface périphérique (19) du tronçon d'extrémité avant (18) du rotor (16), et en ce que, en vue de permettre l'assemblage automatique de ces éléments, le rotor (16, 18) comporte des moyens pour l'engagement automatique de l'extrémité libre active (64) de l'organe d'immobilisation (52) dans l'encoche (78) du rotor (16, 18).

2. Antivol selon la revendication 1, caractérisé en ce que le tronçon d'extrémité avant (18) du rotor (16) comporte une rampe (80) formée dans sa surface cylindrique périphérique (19) qui s'étend axialement d'avant en arrière et radialement de l'intérieur vers l'extérieur, depuis le bord avant (17) du rotor, pour coopérer avec l'extrémité libre active (64, 68) de l'organe d'immobilisation (52) lors de l'introduction axiale du tronçon d'extrémité avant (18) du rotor (16) dans l'alésage arrière (34) de l'organe de sortie (20).

3. Antivol selon la revendication 2, caractérisé en ce que la rampe (80) est disposée angulairement au droit de l'encoche (78), et en ce que le rotor (16, 18) est lié en rotation à l'organe de sortie (20) par des moyens (36, 38) de formes complémentaires qui s'emboîtent axialement lors de l'introduction axiale du tronçon d'extrémité avant (18) du rotor (16) dans l'alésage arrière (34) de l'organe de sortie.

4. Antivol selon l'une quelconque des revendications précédentes, caractérisé en ce que l'organe d'immobilisation (52) est un élément en fil en forme d'arc de cercle qui est logé dans une gorge circulaire (54) radiale formée dans la surface périphérique (46) de l'organe de sortie (20) et dont l'extrémité libre active (64) s'étend radialement à travers une lumière (72) formée dans le fond (56) de la gorge (54) pour s'étendre radialement vers l'intérieur dans l'alésage arrière (34) de l'organe de sortie (20).

5. Antivol selon la revendication 4, caractérisé en ce que l'autre extrémité libre (60) de l'élément en fil (52) est conformé en crochet et est reçue dans un trou (62) du fond de la gorge (54) pour retenir l'élément d'immobilisation (52) en position dans la gorge (54).

6. Antivol selon l'une quelconque des revendications 4 ou 5, caractérisé en ce que l'extrémité libre active (64) de l'élément en fil est repliée en forme d'épingle à cheveux (66, 68, 70) d'orientation globalement radiale avec son brin intermédiaire (68) en arc de cercle qui fait saillie radialement dans l'alésage arrière (34) de l'organe de sortie (20) pour être reçu dans l'encoche (78) du rotor (16, 18).

7. Antivol selon la revendication 6, caractérisé en ce que le brin libre (70) de l'extrémité libre active (64) en épingle à cheveux est conformé en crochet (74) pour permettre l'action d'un outil (76) en vue de l'extraction radiale de l'extrémité libre active (64, 68, 70) de l'élément en fil (52) hors de l'encoche du rotor pour le démontage des éléments (18, 20).

8. Antivol selon la revendication 7, caractérisé en ce que l'organe de sortie (20) est délimité par surface périphérique (46) de forme générale cylindrique qui est montée à rotation dans un logement complémentaire (84, 88) du boîtier (12, 15), et en ce que le boîtier (12, 15, 84) comporte une fenêtre (86) d'orientation radiale qui, pour une position angulaire déterminée du rotor par rapport au boîtier (12), est en regard de l'extrémité libre active (64) en épingle à cheveux conformée en crochet (74) pour permettre l'introduction d'un outil de démontage (76).
